# EUROPÄISCHE PATENTSCHRIFT

(11) **EP 3 475 788 B1**
(45) Veröffentlichungstag und Bekanntmachung des Hinweises auf die Patenterteilung: **11.08.2021**
(21) Anmeldenummer: 17736590.5
(22) Anmeldetag: 27.06.2017
(51) Int. Cl.: G06F 3/01, G06F 3/0354, B60W 50/16, G05G 5/03

(54) **BERÜHREMPFINDLICHES EINGABEGERÄT MIT VERBESSERTER HAPTIKERZEUGUNG**
TOUCH SENSITIVE INPUT DEVICE WITH IMPROVED HAPTIC FEEDBACK
DISPOSITIF DE SAISIE TACTILE AVEC RÉPONSE HAPTIQUE AMÉLIORÉ

(30) Priorität: 27.06.2016 DE 102016111742
(43) Veröffentlichungstag der Anmeldung: 01.05.2019
(73) Patentinhaber: PREH GmbH, 97616 Bad Neustadt a.d. Saale (DE)
(72) Erfinder: EHRENBERG, Jochen, 97618 Rödelmaier (DE)
(74) Vertreter: Lohmanns, Bernard
(86) Internationale Anmeldenummer: PCT/EP2017/065813
(87) Internationale Veröffentlichungsnummer: WO 2018/002028

(56) Entgegenhaltungen:
- EP-A2- 2 570 889
- WO-A1-2010/054014
- WO-A1-2013/134388
- US-A1- 2002 033 795
- US-A1- 2009 174 672
- US-A1- 2015 133 221
- US-A1- 2016 179 200

## Beschreibung

Die Erfindung betrifft ein berührempfindliches Eingabegerät, welches einen Träger, ein an dem Träger mittels erster Lagerungsmittel längs wenigstens einer Auslenkrichtung bewegbar gelagertes, berührempfindliches Eingabeteil, wie ein Touchpad oder ein Touchscreen, insbesondere ein eine elektronische Pixelmatrixanzeige aufweisenden Touchscreen, aufweist. Beispielsweise handelt es sich um eine Anzeige im Flüssigkristallaufbau oder in OLED-Bauweise. Beispielsweise weist das Touchpad beziehungsweise der Touchscreen eine kapazitive Elektrodensensorik zur ortsauflösenden Berührdetektion auf. In einer Ausgestaltung ist ferner oder alternativ ein Kraftsensor zur Messung einer mit der Berührung einhergehenden, auf die berührempfindliche Anzeige einwirkenden Betätigungskraft vorgesehen.

Gattungsgemäß ist ferner ein Aktuator vorgesehen, der das Eingabeteil längs der Auslenkrichtung antreibt, um bei erfolgter Berührung und/oder bei Überschreiten einer vorgegebenen, durch den Kraftsensor gemessenen Betätigungskraft ein haptisches Feedback zu erzeugen, um letztlich dem Bediener eine Rückmeldung zu geben, dass eine Berührung und/oder Betätigung detektiert wurde und dass gegebenenfalls ein Schalt- oder Steuervorgang zugeordnet wird.

Bei den bekannten Eingabegeräten stützt sich der Aktuator unmittelbar an dem Träger ab, der in der Regel im Wesentlichen aus einem Thermoplast besteht. Somit werden Schwingungsimpulse, die insbesondere als Gegenimpuls bei der Haptikerzeugung entstehen, in das Gehäuse eingekoppelt. Diese nachfolgend als Sekundärschwingungen bezeichnete und unerwünschte Anregungen werden durch Körperschallabstrahlung oder in Form von Vibrationen anderer Bauteile akustisch vom Bediener wahrgenommen und als störend empfunden. Darüber hinaus besteht Bedarf, die Haptikerzeugung so auszulegen, dass sich bei der Haptikerzeugung ein vorgegebener, reproduzierbarer Bewegungsverlauf, insbesondere ein Bewegungsverlauf, ergibt, wie er durch den Aktuator ursprünglich initiiert worden ist, beispielsweise ein im Wesentlichen transversaler Bewegungsverlauf. Gleichzeitig unterliegen derartige Eingabegeräte der allgemeinen Anforderung Bauraum einzusparen.

Die US 2016/179200 A1 offenbart ein berührempfindliches Eingabegerät gemäß dem Oberbegriff des Anspruchs 1. Ein berührempfindliches Eingabegerät mit Zusatzkörper ist ferner aus der EP 2 570 889 A2 bekannt.

Der Erfindung liegt daher die Aufgabe zugrunde, ein Eingabegerät mit haptischer Rückmeldung mittels aktuatorischer Bewegungsanregung bereitzustellen, bei dem für eine verbesserte Bewegungsanregung gesorgt ist, indem die eingangs genannten Sekundärschwingungen verringert sind und somit insgesamt gesehen das Eingabegerät in schwingungstechnischer Hinsicht verbessert ist und insbesondere bauraumsparend realisiert ist. Erfindungsgemäß wird die Aufgabe durch ein berührempfindliches Eingabegerät mit den Merkmalen des Anspruchs 1 gelöst. Eine gleichermaßen vorteilhafte Verwendung ist Gegenstand des nebengeordneten Anspruchs. Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße Eingabegerät weist einen Träger auf. Der Begriff "Träger" ist weit auszulegen und dient im Allgemeinen der Festlegung und haltenden Funktion des Eingabegeräts, beispielsweise an einer Innenverkleidung, einer Mittelkonsole oder an einem Armaturenbrett eines Kraftfahrzeugs. Beispielsweise ist der Träger aus einem Kunststoff, wie einem Thermoplast.

Erfindungsgemäß ist ferner ein berührempfindliches Eingabeteil vorgesehen. Der Begriff "berührempfindliches Eingabeteil" ist ebenfalls weit auszulegen. Dabei handelt es sich im Allgemeinen um ein Teil des Eingabegeräts, das eine dem Bediener zugewandte Eingabefläche definiert, auf der eine Berührung durch ein Eingabeorgan oder einen Finger eines Bedieners durch eine Sensorik detektiert wird, bevorzugt ortsauflösend detektiert wird. Bevorzugt handelt es sich bei dem berührempfindlichen Eingabeteil um ein Touchpad, d.h. ein anzeigeloses Eingabeteil mit ortsauflösender Detektion einer Berührung auf einer zum Eingabeteil gehörigen Eingabefläche oder ein Touchscreen, d.h. ein Eingabeteil mit ortsauflösender Detektion einer Berührung auf einer zum Eingabeteil gehörigen Eingabefläche, wobei im letzteren Fall der Eingabefläche ferner eine elektronische Anzeige, insbesondere eine elektronische Pixelmatrixanzeige zugeordnet ist.

Beispielsweise sind der Eingabefläche ein oder mehrere Sensoren zur Detektion einer Berührung und/oder einer Druckkraft auf der Eingabefläche zugeordnet. Beispielsweise handelt es sich um mehrere in einer Matrix angeordnete Elektroden und eine zugehörige Auswerteinheit zur ortsauflösenden Berührungsdetektion und/oder einen oder mehrere Kraftsensoren zur Detektion der durch die Betätigung bewirkten Druckkraft, wie einen oder mehrere kapazitive Kraftsensoren.

Erfindungsgemäß ist ein starr mit dem Eingabeteil verbundener Zusatzkörper vorgesehen. Als Zusatzkörper wird beispielsweise ein Körper verstanden, der eine höhere Massendichte als eine berührempfindliche Anzeige aufweist, beispielsweise von mehr als 2.000 kg/ m³, bevorzugt mehr als 7.000 kg/ m³, noch bevorzugter mehr als 10.000 kg/m³. Die Zusatzmasse kann beliebig geformt sein. Bevorzugt ist die Zusatzmasse aus einem Metall, wie Zink oder Blei oder einer metallischen Legierung, wie einer zink- und/oder bleihaltigen Legierung, beispielsweise ZAMAK. Bevorzugt ist die Zusatzmasse auf der dem Bediener abgewandten Seite des Eingabeteils vorgesehen.

Ferner sind erste Lagerungsmittel, mittels derer das Eingabeteil beweglich am Gehäuse längs wenigstens einer Auslenkrichtung gelagert ist, vorgesehen. Bevorzugt umfassen die ersten Lagerungsmittel ferner erste Rückstellmittel zur elastischen Rückstellung des Betätigungsteils in eine Ruhestellung. Beispielsweise sind die ersten Lagerungsmittel als Bleche aus Federstahl ausgebildet.

Erfindungsgemäß ist ferner ein elektromagnetischer Aktuator vorgesehen, um das Eingabeteil zur Erzeugung eines haptischen Feedbacks bewegend anzutreiben. Bevorzugt wird das Eingabeteil linear angetrieben. Beispielsweise handelt es sich um einen Aktuator mit Spule, dessen durch die Spule erzeugtes, elektromagnetisches Feld zur Zusammenwirkung mit einem Anker ausgebildet und angeordnet ist. Erfindungsgemäß weist dieser Aktuator eine die effektive Wirkrichtung beschreibende Wirkachse auf, um eine Bewegung des Eingabeteils, beispielsweise der berührempfindlichen Anzeige, zur Erzeugung einer haptischen Rückmeldung in Auslenkrichtung zu bewirken.

Erfindungsgemäß wird vorgeschlagen, einen Tilgerkörper vorzusehen, der mittels zweiter Lagerungsmittel wenigstens entlang der Auslenkrichtung bewegbar an dem Träger gelagert ist. Ferner ist vorgesehen, dass der Aktuator zwischen dem Tilgerkörper und der Kombination aus Eingabeteil und Zusatzkörper wirkt, indem er sich einerseits an dem Tilgerkörper abstützt und andererseits auf die Kombination aus Eingabeteil und Zusatzkörper über den Anker anziehend oder abstoßend einwirkt, um eine Bewegung des Eingabeteils zur Erzeugung einer haptischen Rückmeldung, auch haptisches Feedback genannt, im Wesentlichen entgegengesetzt zur Auslenkung des Tilgerkörpers zu bewirken. Bevorzugt ist der Aktuator ausgelegt, eine annähernde Bewegung zwischen Eingabeteil und Tilgerkärper auszulösen.

Als Tilgerkörper wird beispielsweise ein Körper verstanden, der eine höhere Massendichte als eine berührempfindliche Anzeige aufweist, beispielsweise von mehr als 2.000 kg/ m³ bevorzugt mehr als 7.000 kg/m³, noch bevorzugter mehr als 10.000 kg/ m³. Der Tilgerkörper kann beliebig geformt sein. Bevorzugt ist der Tilgerkörper aus einem Metall, wie Zink oder Blei oder einer metallischen Legierung, wie einer zink- oder bleihaltigen Legierung, beispielsweise ZAMAK.

Durch die Abstützung des Aktuators über den schwingend gelagerten Tilgerkörper kann die durch den Aktuator bewirkte Haptikerzeugung von dem Träger verbessert schwingungstechnisch und damit akustisch entkoppelt werden, da der Aktuator sich eben erfindungsgemäß nicht unmittelbar am Träger sondern über den beweglich am Träger gelagerten Tilgerkörper abstützt. Dadurch wird eine Entkopplung der Haptikerzeugung bewirkt. Erfindungsgemäß ist der Aktuator, wie zuvor erwähnt, ein elektromagnetischer Aktuator und die magnetfelderzeugenden Mittel des Aktuators sind an dem Tilgerkörper befestigt, während der zugehörige Anker an der Kombination aus Eingabeteil und Zusatzkörper, beispielsweise unmittelbar am Zusatzkörper oder an dem Eingabeteil befestigt ist. Die jeweiligen Massen von Anker und Spule sind insbesondere bei dieser Ausführungsform des Aktuators bei der massenmäßigen Betrachtung von Tilgerkörper und Eingabeteil beziehungsweise Zusatzkörper jeweils mit zu berücksichtigen und hinzu zu addieren.

Aufgabe des Zusatzkörpers ist es, eine Schwerpunktverlagerung gegenüber einer Lösung ohne Zusatzkörper zu bewirken, die eine solche konstruktive Auslegung des Eingabegeräts ermöglicht, dass die Wirkrichtung des Aktuators möglichst schwerpunktnah erfolgen kann, bevorzugt die die effektive Wirkrichtung beschreibende Wirkachse den gemeinsamen Schwerpunkt der Kombination aus Eingabeteil und Zusatzkörper schneidet, um die Gefahr der Anregung einer haptisch störenden Rotationsbewegung insbesondere des Eingabeteils zu minimieren.

Erfindungsgemäß definieren das Eingabeteil und der Zusatzkörper ein Hohlvolumen, in dem wenigstens der Aktuator angeordnet ist. Dadurch kann bauraumsparend eine Lösung geschaffen werden, bei dem der Aktuator und insbesondere dessen Wirkachse möglichst nahe am Schwerpunkt der Kombination aus Eingabeteil und Zusatzkörper angeordnet ist, so dass die Anregung unerwünschter Schwingungsmoden, insbesondere Rotationsschwingungen, des Eingabeteils reduziert werden können.

Beispielsweise bilden die ersten Lagerungsmittel und/oder die zweiten Lagerungsmittel eine auf magnetischer Abstoßung beruhende Lagerung, eine Rolllagerung, Gleitlagerung oder eine pendelnd abstützende oder pendelnd hängende Lagerung aus. Bevorzugt wirken die ersten und zweiten Lagerungsmittel elastisch rückstellend. Noch bevorzugter sind die ersten Lagerungsmittel und die zweiten Lagerungsmittel als Federn, bevorzugt als abschnittsweise U-förmige Federstahlbleche, ausgebildet. Beispielsweise umfassen die zweiten, dem Tilgerkörper zugeordneten Lagerungsmittel vier Federn und die ersten, der Kombination aus Eingabeteil und Zusatzkörper zugeordneten Lagerungsmittel ebenfalls vier Federn.

Bevorzugt sind die ersten Lagerungsmittel und zweiten Lagerungsmittel in einer gemeinsamen Ebene angeordnet.

Zur Realisierung einer besonders kompakten Ausführungsform bei gleichzeitig ausgeprägter Schwerpunktverlagerung ist gemäß einer bevorzugten Ausgestaltung der Träger so angeordnet, dass er in das durch das vom Eingabeteil und dem Zusatzkörper definierte Hohlvolumen eingreift.

Beispielsweise ist die Resonanzfrequenz der schwingenden Systeme aus Tilgerkörper einerseits und der Kombination aus Eingabeteil und Zusatzkörper im Wesentlichen übereinstimmend ausgelegt, indem die jeweiligen Federkonstanten der zugehörigen Lagerungsmittel den Massen entsprechend eingestellt sind.

Bevorzugt ist zur Abstimmung der jeweiligen Auslenkgeschwindigkeiten von Tilgerkörper einerseits und der Kombination aus Eingabeteil und Zusatzkörper andererseits die Federkonstante der zweiten Lagerungsmittel jeweils im Vergleich zur Federkonstanten der ersten Lagerungsmittel unterschiedlich. Bevorzugt ist die die Federkonstante der zweiten Lagerungsmittel jeweils im Vergleich zur Federkonstanten der ersten Lagerungsmittel geringer.

Bevorzugt sind die Federn so angeordnet und ausgestaltet, dass diese jeweils an ihrem Schubmittelpunkt beansprucht werden. Der Schubmittelpunkt bestimmt sich durch den zur Auslenkrichtung orthogonalen Querschnitt der jeweiligen Feder.

Gemäß einer weiteren bevorzugten Ausgestaltung ist ferner wenigstens ein Schwingungsdämpfer vorgesehen. Damit lassen sich vorteilhaft die Auslenkgeschwindigkeiten beziehungsweise die Maximalauslenkungen begrenzen.

Bevorzugt ist der Schwingungsdämpfer zwischen dem Träger und dem Tilgerkörper vorgesehen, um dämpfend bezüglich der Auslenkung des Tilgerkörpers zu wirken.

Bevorzugt ist die Masse des Tilgerkörpers, sofern vorhanden, einschließlich der zuvor beschriebenen Spule, geringer ist als die Gesamtmasse von Eingabeteil und Zusatzkörper.

Bevorzugt ist die Masse des Tilgerkörpers größer als ein Viertel der Masse des Eingabeteils, bevorzugter ist die Masse des Tilgerkörpers größer als ein Viertel der Gesamtmasse von Eingabeteil und Zusatzkörper.

Bevorzugt ist die die effektive Wirkrichtung beschreibende Wirkachse des Aktuators parallel zu einer von dem Eingabeteil definierten Eingabefläche.

Bevorzugt liegt der durch das Eingabeteil und den Zusatzkörper bestimmte Schwerpunkt auf der Wirkachse des Aktuators.

Beispielsweise ist der Tilgerkörper plattenförmig ausgestaltet. Bevorzugt ist der Tilgerkörper räumlich bezogen auf einen Bediener unterhalb des Eingabeteils, bevorzugt zwischen dem Eingabeteil und dem Zusatzkörper, noch bevorzugter zwischen dem Eingabeteil und dem Träger angeordnet.

Die Erfindung betrifft ferner die Verwendung des berührempfindlichen Eingabegeräts in einer der zuvor beschriebenen Ausführungsformen in einem Kraftfahrzeug, insbesondere in einer Mittelkonsole eines Kraftfahrzeugs.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, die Erfindung jedoch nicht darauf beschränkt ist. Es zeigt schematisch:

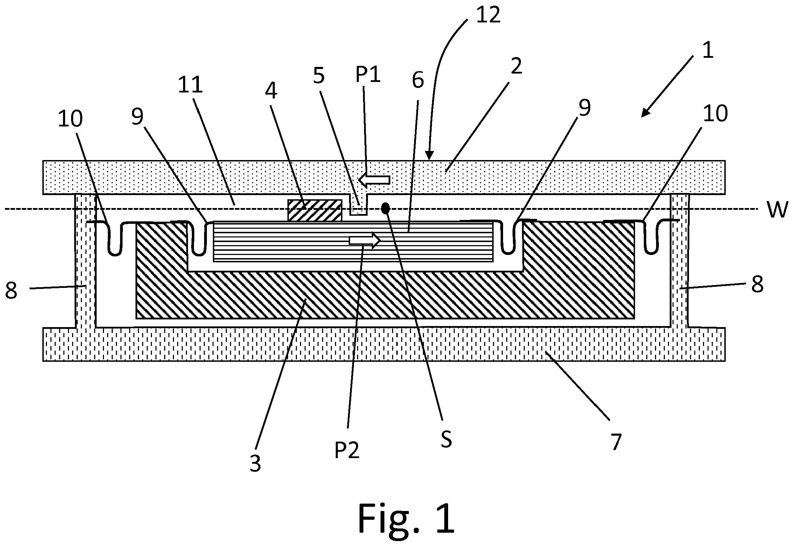

Fig. 1 eine Schnittdarstellung einer erfindungsgemäßen Ausführungsform des Eingabegeräts.

Figur 1 zeigt eine erfindungsgemäße Ausführungsform des Eingabegeräts 1. Es weist einen Träger 3 auf, der der Befestigung des Eingabegeräts 1 an einer nicht dargestellten Mittelkonsole oder einem nicht dargestellten Armaturenbrett eines Kraftfahrzeugs dient. An dem Träger 3 ist beweglich eine Kombination aus einem Eingabeteil 2 und einem Zusatzkörper 7 gelagert. Bei der vorliegenden Ausführungsform handelt es sich bei dem Eingabeteil 3 um einen Touchscreen, d.h. eine Kombination einer elektronischen Pixelmatrixanzeige mit einer kapazitiven Berührsensorik, wobei letztere die Berührung der durch das Eingabeteil 2 definierten Eingabefläche 12 detektiert.

Das Eingabeteil 2 ist über die Befestigungspfosten 8 starr mit dem ansonsten plattenförmigen Zusatzkörper 7 verbunden. Beide, Zusatzkörper 7 und Eingabeteil 2 sind über die ersten Lagerungsmittel 10 beweglich und elastisch rückstellend am Träger 3 gelagert. Bei den ersten Lagerungsmitteln 10 handelt es sich um vier Federstahlbleche, die abschnittsweise U-förmig ausgebildet sind. Die ersten Lagerungsmittel 10 sind so angeordnet, dass eine rückstellende Bewegung des Eingabeteils 2 samt des starr mit dem Eingabeteil verbundenen Zusatzkörpers 7 in einer zur Eingabefläche 12 parallelen Richtung ermöglicht ist.

Die Masse des Zusatzkörpers 7 ist so gewählt, dass der gemeinsame Schwerpunkt S zwischen dem Eingabeteil 2 und dem Zusatzkörper 7 befindlich ist und somit in der Ebene angeordnet ist, in der die durch die Linie W angedeutete Wirkachse eines elektromagnetischen Aktuators 4 liegt, der der elektromagnetisch bewirkten Auslenkung des Eingabeteils 2 samt Zusatzgewicht 7 aus der Ruhelage dient, wie durch den Pfeil P1 angedeutet, um aufgrund der Auslenkung und ihrer haptischen Wahrnehmbarkeit durch einen die Eingabefläche 12 berührenden Finger eine haptische Rückmeldung seitens des Bedieners hervorzurufen. Der Aktuator 4 weist eine Spule und einen mit dem Magnetfeld der Spule zusammenwirkenden Anker 5 auf, der am Eingabeteil 2 vorgesehen ist.

Wie Figur 1 ferner zeigt, stützt sich der Aktuator 4 insbesondere dessen Spule an einem plattenförmigen Tilgerkörper 6 ab, der seinerseits über rückstellende, zweite Lagerungsmittel 9 am Träger 3 gelagert ist. Bei den zweiten Lagerungsmitteln 9 handelt es sich ebenfalls um Federn aus Federstahlbleche, die abschnittsweise U-förmig ausgebildet sind. Die Federn der ersten Lagerungsmittel 10 und der zweiten Lagerungsmittel 9 sind in einer gemeinsamen Ebene angeordnet. Die Federn der ersten Lagerungsmittel 10 und der zweiten Lagerungsmittel 9 sind ferner jeweils so angeordnet und ausgestaltet, dass diese jeweils an ihrem Schubmittelpunkt entgegen ihrer Rückstellwirkung durch den Aktuator 4 beansprucht werden. Der Schubmittelpunkt bestimmt sich durch den zur Auslenkrichtung orthogonalen Querschnitt der jeweiligen Feder.

Die durch die zweiten Lagerungsmittel 9 bereitgestellte elastische Lagerung des Tilgerkörpers 6 dient der Aufnahme des durch den Aktuator 4 erzeugten Gegenimpulses P2, so dass der Aktuator 4 und somit die Haptikerzeugung aufgrund dessen elastischer Abstützung über den Tilgerkörper 6 gegenüber dem Träger 3 in Bezug auf die Stoß- und Schwingungsübertragung entkoppelt ist. Damit ist der durch die Haptikerzeugung hervorgerufene akustische Schallübergang in den Träger 3 und insbesondere in die angrenzend an den Träger 3 angeordnete Fahrzeugumgebung, wie eine Mittelkonsolenverkleidung oder Dergleichen, verringert.

Der zuvor erwähnte Zusatzkörper 7 und die sich aufgrund des Zusatzkörpers 7 ergebende Schwerpunktlage S sorgt ferner dafür, dass das Eingabeteil 2 durch den Aktuator 4 eine zumindest annährend reine transversale Schwingungsanregung, d.h. möglichst ohne rotatorische Schwingungsmoden, erfährt. Wie aus Figur 1 ersichtlich, ist der Aktuator 4, der Tilgerkörper und der Träger 3 in einem durch das Eingabeteil 2 und den Zusatzkörper 7 definierten Hohlvolumen 11 ganz oder wenigstens teilweise angeordnet. Damit wird einerseits eine bauraumsparende Auslegung des Eingabegeräts 1 erreicht. Andererseits kann durch diese Auslegung eine Bewegungsanregung durch den Aktuator 4 realisiert werden, die möglichst rein translatorisch, d.h. möglichst frei von Rotationsschwingungen ist. Nur durch die den Hohlraum 11 definierende Konstruktion ist es möglich, dass die Wirkachse W des Aktuators den gemeinsamen Schwerpunkt aus Eingabeteil 2 und Zusatzkörper 7 schneidet und gleichzeitig die Wirkachse W parallel zur Eingabefläche 12 verläuft.

Der Tilgerkörper 6 ist zur Realisierung einer bauraumsparenden Ausführungsform in einer Ausnehmung des Trägers 3 angeordnet. Zur Abstimmung der jeweiligen Auslenkgeschwindigkeiten von Tilgerkörper 6 einerseits und der Kombination aus Eingabeteil 2 und Zusatzkörper 7 andererseits ist die Federkonstante der zweiten Lagerungsmittel 9 jeweils im Vergleich zur Federkonstanten der ersten Lagerungsmittel 10 unterschiedlich. Die Masse des Tilgerkörpers 6 einschließlich der zum Aktuator 4 gehörigen Spule ist geringer als die Gesamtmasse von Eingabeteil 2 und Zusatzkörper 7 aber gleichzeitig größer als ein Viertel der Masse des Eingabeteils 2.

## Patentansprüche

1. Berührempfindliches Eingabegerät (1), aufweisend:
einen Träger (3);
ein berührempfindliches Eingabeteil (2), wie ein Touchpad oder ein Touchscreen sowie ein starr mit dem Eingabeteil (2) verbundener Zusatzkörper (7, 8), der gemeinsam mit dem Eingabeteil (2) an dem Träger (3) mittels erster Lagerungsmittel (10) gemeinsam längs wenigstens einer Auslenkrichtung bewegbar gelagert ist;
einen Aktuator (4) zur Erzeugung einer haptischen Rückmeldung mit einer Wirkachse (W), die parallel zu der wenigstens einen Auslenkrichtung ist;
**gekennzeichnet durch**
einen Tilgerkörper (6), der mittels zweiter Lagerungsmittel (9) wenigstens entlang der Auslenkrichtung bewegbar an dem Träger (3) gelagert ist; und
**dadurch, dass** der Aktuator (4) zwischen dem Tilgerkörper (6) und der Kombination aus Eingabeteil (2) und Zusatzkörper (7,8) wirkt, indem er sich einerseits an dem Tilgerkörper (6) abstützt und andererseits auf die Kombination aus Eingabeteil (2) und Zusatzkörper (7,8) anziehend oder abstoßend einwirkt,
um eine Bewegung des Eingabeteils (2) zur Erzeugung einer haptischen Rückmeldung im Wesentlichen entgegengesetzt zum Tilgerkörper (6) zu bewirken,
dass die Kombination aus dem Eingabeteil (2) und dem Zusatzkörper (7, 8) ein Hohlvolumen (11) definiert, in dem wenigstens der Aktuator (4) angeordnet ist,
und dass der Aktuator ein elektromagnetischer Aktuator (4) mit magnetfelderzeugenden Mitteln und einem Anker (5) ist, wobei die magnetfelderzeugenden Mittel an dem Tilgerkörper (6) befestigt sind und der Anker (5) an der Kombination aus Eingabeteil (2) und Zusatzkörper (7, 8) befestigt ist.

2. Berührempfindliches Eingabegerät (1) nach Anspruch 1, wobei die ersten Lagerungsmittel (10) und zweiten Lagerungsmittel (9) in einer gemeinsamen Ebene angeordnet sind.

3. Berührempfindliches Eingabegerät (1) nach einem der vorhergehenden Ansprüche, wobei in das Hohlvolumen (11) eingreifend der Träger (3) angeordnet ist.

4. Berührempfindliches Eingabegerät (1) nach einem der vorhergehenden Ansprüche, wobei die ersten Lagerungsmittel (10) und die zweiten Lagerungsmittel (9) als Federn, bevorzugt als abschnittsweise U-förmige Federstahlbleche ausgebildet sind.

5. Berührempfindliches Eingabegerät (1) nach dem vorhergehenden Anspruch, wobei die Federkonstante der zweiten Lagerungsmittel (9) im Vergleich zur Federkonstanten der ersten Lagerungsmittel (10) unterschiedlich, bevorzugt geringer ist.

6. Berührempfindliches Eingabegerät (1) nach einem der vorhergehenden Ansprüche, wobei ferner wenigstens ein Schwingungsdämpfer vorgesehen ist.

7. Berührempfindliches Eingabegerät (1) nach dem vorhergehenden Anspruch, wobei der Schwingungsdämpfer zwischen dem Träger (3) und dem Tilgerkörper (6) vorgesehen ist.

8. Berührempfindliches Eingabegerät (1) nach einem der vorhergehenden Ansprüche, wobei die Masse des Tilgerkörper (6) geringer ist als die Gesamtmasse von Eingabeteil (2) und Zusatzkörper (7, 8).

9. Berührempfindliches Eingabegerät (1) nach dem vorhergehenden Anspruch, wobei die Masse des Tilgerkörpers (6) größer ist als ein Viertel der Masse des Eingabeteils, bevorzugt größer ist als ein Viertel der Gesamtmasse von Eingabeteil (2) und Zusatzkörper (7, 8).

10. Berührempfindliches Eingabegerät (1) nach einem der vorhergehenden Ansprüche, wobei die Wirkachse (W) parallel zu einer von dem Eingabeteil (2) definierten Eingabefläche (12) ist.

11. Berührempfindliches Eingabegerät (1) nach einem der vorhergehenden Ansprüche, wobei der durch das Eingabeteil (2) und den Zusatzkörper (7,8) definierte Schwerpunkt (S) auf der Wirkachse (W) liegt.

12. Berührempfindliches Eingabegerät (1) nach einem der vorhergehenden Ansprüche, wobei der Aktuator (4) ein elektromagnetischer Linearaktuator mit Flachanker ist.

13. Verwendung des berührempfindlichen Eingabegeräts (1) nach einem der vorhergehenden Ansprüche in einem Kraftfahrzeug, insbesondere in einer Mittelkonsole eines Kraftfahrzeugs.

## Claims

1. Touch-sensitive input device (1), comprising:
a support (3);
a touch-sensitive input part (2), such as a touchpad or a touchscreen, and
a supplementary body (7, 8), which is rigidly connected to the input part (2) and together with the input part (2) is jointly mounted on the support (3) so as to be movable along at least one deflection direction by means of first bearing means (10);
an actuator (4) for producing haptic feedback, having an effective axis (W), which is parallel to the at least one deflection direction;
**characterized by**
a damper body (6), which is mounted on the support (3) so as to be movable at least along the deflection direction by means of second bearing means (9); and
in that the actuator (4) acts between the damper body (6) and the combination of the input part (2) and the supplementary body (7, 8), by on the one hand supporting itself on the damper body and on the other hand acting in an attracting or repelling manner on the combination of the input part (2) and the supplementary body (7, 8), in order to bring about a movement of the input part (2) substantially counter to the damper body (4) to produce haptic feedback, in that the combination of the input part (2) and the supplementary body (7, 8) defines a hollow volume (11), in which at least the actuator (4) is arranged, and in that the actuator is an electromagnetic actuator (4) having magnetic-field-generating means and an armature (5), wherein the magnetic-field-generating means are fastened to the damper body (6) and the armature (5) is fastened to the combination of the input part (2) and the supplementary body (7, 8).

2. Touch-sensitive input device (1) according to Claim 1, wherein the first bearing means (10) and the second bearing means (9) are arranged in a common plane.

3. Touch-sensitive input device (1) according to one of the preceding claims, wherein the support (3) is arranged reaching into the hollow volume (11).

4. Touch-sensitive input device (1) according to one of the preceding claims, wherein the first bearing means (10) and the second bearing means (9) are formed as springs, preferably as partly U-shaped spring-steel sheets.

5. Touch-sensitive input device (1) according to the preceding claim, wherein the spring constant of the second bearing means (9) is different, preferably smaller, in comparison with the spring constant of the first bearing means (10).

6. Touch-sensitive input device (1) according to one of the preceding claims, wherein furthermore at least one vibration damper is provided.

7. Touch-sensitive input device (1) according to the preceding claim, wherein the vibration damper is provided between the support (3) and the damper body (6).

8. Touch-sensitive input device (1) according to one of the preceding claims, wherein the mass of the damper body (6) is smaller than the overall mass of the input part (2) and the supplementary body (7, 8).

9. Touch-sensitive input device (1) according to the preceding claim, wherein the mass of the damper body (6) is greater than one quarter of the mass of the input part, preferably greater than one quarter of the overall mass of the input part (2) and the supplementary body (7, 8).

10. Touch-sensitive input device (1) according to one of the preceding claims, wherein the effective axis (W) is parallel to an input surface (12) defined by the input part (2).

11. Touch-sensitive input device (1) according to one of the preceding claims, wherein the centroid (S) defined by the input part (2) and the supplementary body (7, 8) lies on the effective axis (W).

12. Touch-sensitive input device (1) according to one of the preceding claims, wherein the actuator (4) is an electromagnetic linear actuator with a flat armature.

13. Use of the touch-sensitive input device (1) according to one of the preceding claims in a motor vehicle, in particular in a centre console of a motor vehicle.

## Revendications

1. Appareil de saisie tactile (1), présentant :
un support (3) ;
une partie de saisie tactile (2), telle qu'un pavé tactile ou un écran tactile, ainsi qu'un corps auxiliaire (7, 8) relié rigidement à la partie de saisie (2) et qui est monté conjointement avec la partie de saisie (2) sur le support (3) à l'aide de premiers moyens formant palier (10) de manière à pouvoir se déplacer ensemble le long d'au moins une direction de déviation ;
un actionneur (4) pour produire un retour haptique ayant un axe actif (W) qui est parallèle à ladite au moins une direction de déviation ;
**caractérisé par** un corps d'amortissement (6) qui est monté sur le support (3) à l'aide de deuxièmes moyens formant palier (9) de manière à pouvoir se déplacer au moins le long de la direction de déviation ; et
en ce que l'actionneur (4) agit entre le corps d'amortissement (6) et la combinaison de la partie de saisie (2) et du corps auxiliaire (7, 8) en s'appuyant d'une part sur le corps d'amortissement et en agissant d'autre part sur la combinaison de la partie de saisie (2) et du corps auxiliaire (7, 8) en l'attirant ou en la repoussant afin de provoquer un déplacement de la partie de saisie (2) pour produire un retour haptique substantiellement à l'opposé du corps d'amortissement (4), en ce que la combinaison de la partie de saisie (2) et du corps auxiliaire (7, 8) définit un volume creux (11) dans lequel est disposé au moins l'actionneur (4), et en ce que l'actionneur est un actionneur électromagnétique (4) doté de moyens de génération de champ magnétique et d'un induit (5), les moyens de génération de champ magnétique étant fixés au corps d'amortissement (6), et l'induit (5) étant fixé à la combinaison de la partie de saisie (2) et du corps auxiliaire (7, 8).

2. Appareil de saisie tactile (1) selon la revendication 1, dans lequel les premiers moyens formant palier (10) et les deuxièmes moyens formant palier (9) sont disposés dans un plan commun.

3. Appareil de saisie tactile (1) selon l'une quelconque des revendications précédentes, dans lequel le support (3) est disposé en pénétrant dans le volume creux (11).

4. Appareil de saisie tactile (1) selon l'une quelconque des revendications précédentes, dans lequel les premiers moyens formant palier (10) et les deuxièmes moyens formant palier (9) sont réalisés sous la forme de ressorts, de préférence sous la forme de tôles d'acier à ressort, par endroits en forme de U.

5. Appareil de saisie tactile (1) selon la revendication précédente, dans lequel la constante de rappel des deuxièmes moyens formant palier (9) est en comparaison différente de la constante de rappel des premiers moyens formant palier (10), de préférence inférieure.

6. Appareil de saisie tactile (1) selon l'une quelconque des revendications précédentes, dans lequel en outre un amortisseur de vibrations est prévu.

7. Appareil de saisie tactile (1) selon la revendication précédente, dans lequel l'amortisseur de vibrations est prévu entre le support (3) et le corps d'amortissement (6).

8. Appareil de saisie tactile (1) selon l'une quelconque des revendications précédentes, dans lequel la masse du corps d'amortissement (6) est inférieure à la masse totale de la partie de saisie (2) et du corps auxiliaire (7, 8).

9. Appareil de saisie tactile (1) selon la revendication précédente, dans lequel la masse du corps d'amortissement (6) est supérieure à un quart de la masse de la partie de saisie, de préférence supérieure à un quart de la masse totale de la partie de saisie (2) et du corps auxiliaire (7, 8).

10. Appareil de saisie tactile (1) selon l'une quelconque des revendications précédentes, dans lequel l'axe actif (W) est parallèle à une surface de saisie (12) définie par la partie de saisie (2).

11. Appareil de saisie tactile (1) selon l'une quelconque des revendications précédentes, dans lequel le centre de gravité (S) défini par la partie de saisie (2) et le corps auxiliaire (7, 8) se trouve sur l'axe actif (W).

12. Appareil de saisie tactile (1) selon l'une quelconque des revendications précédentes, dans lequel l'actionneur (4) est un actionneur linéaire électromagnétique à induit plat.

13. Utilisation de l'appareil de saisie tactile (1) selon l'une quelconque des revendications précédentes dans un véhicule automobile, en particulier dans une console centrale d'un véhicule automobile.
